# EUROPÄISCHE PATENTSCHRIFT

(11) **EP 4 070 941 B1**
(45) Veröffentlichungstag und Bekanntmachung des Hinweises auf die Patenterteilung: **15.11.2023**
(21) Anmeldenummer: 21209938.6
(22) Anmeldetag: 23.11.2021
(51) Int. Cl.: B30B 1/40, B21D 19/08, B21D 28/32, B21D 37/10

(54) **KEILTRIEB MIT EINSTELLBARER ARBEITS- UND MONTAGESTELLUNG**
WEDGE DRIVE WITH ADJUSTABLE WORKING AND MOUNTING POSITION
ENTRAÎNEMENT PAR COULISSEAU À POSITION DE TRAVAIL ET DE MONTAGE RÉGLABLE

(30) Priorität: 07.04.2021 DE 202021101852 U
(43) Veröffentlichungstag der Anmeldung: 12.10.2022
(73) Patentinhaber: Fibro GmbH, 74855 Hassmersheim (DE)
(72) Erfinder: MEYER, Markus, 88239 Wangen im Allgäu (DE)
(74) Vertreter: Staeger & Sperling Partnerschaftsgesellschaft mbB

(56) Entgegenhaltungen:
- CN-Y- 201 287 164
- DE-A1-102005 044 951
- US-A- 5 904 064

## Beschreibung

Die Erfindung betrifft einen Keiltrieb, bei dem auf einfache und kostengünstige Weise eine Arbeitsstellung und einer Montagestellung herbeigeführt werden kann. Als Keiltrieb können z. B. sowohl Oberteilschieber als auch Unterteilschieber nach der Idee der Erfindung ausgebildet werden.

Aus dem Stand der Technik sind bereits verschiedene Ausführungsformen von Keiltrieben und Schieber bekannt. Ein Keiltrieb umfasst zumeist einen Schieberoberteil, einen Schieber sowie ein Schieberunterteil. Das Schieberoberteil und das Schieberunterteil sind jeweils an einem Presswerkzeug befestigt und führen zwischen sich den Schieber, sodass der Schieber bei einer Hubbewegung des Presswerkzeugs von dem Schieberoberteil und dem Schieberunterteil geführt in eine zu der Hubrichtung schrägen Stanz- bzw. Arbeitsrichtung und zwischen einer Ausgangsstellung und einer Endstellung bewegt und geführt wird. Mittels der Bewegung in Arbeitsrichtung des Keiltriebs wird beispielsweise ein Stanzen oder Pressen schräg zur eigentlichen Hubrichtung des Presswerkzeugs realisiert.

Gemäß der Terminologie ist diese Einstellung die herkömmliche Arbeitsstellung des Werkzeugs in dem es von einer Ausgangsstellung und einer Endstellung bewegt und geführt wird.

Zwischen dem Schieber und dem Schieberoberteil sowie zwischen dem Schieber und dem Schieberunterteil ist herkömmlicherweise jeweils eine Führungsvorrichtung vorgesehen, welche den Schieber sowohl bei einem Aufwärtshub als auch bei einem Abwärtshub des Presswerkzeugs führt. Bei einem Abwärtshub werden für gewöhnlich an dem Schieberoberteil und dem Schieberunterteil fixierte Gleitplatten auf an dem Schieber fixierte Gleitplatten gepresst. Die Gleitplatten liegen dadurch flächig aneinander an, um über die gesamte Länge der Gleitplatten eine Gleitführung zu realisieren. Durch den Abwärtshub wird der Schieber in die Arbeitsstellung bewegt.

Bei der Verwendung des Keiltriebs ist es aber regelmäßig erforderlich an dem Keiltrieb Arbeiten vorzunehmen, bei dem der Keiltrieb in eine sogenannte "Lock-Out-Stellung" gebracht wird. In dieser Stellung, die nach der Terminologie dieser Erfindung "Montagestellung" genannt wird, müssen gewisse Bedingungen zum sicheren Gebrauch des Werkzeugs erfüllt sein. Der Benutzer oder Arbeiter am Werkzeug soll sich bei den Arbeiten am Werkzeug weder verletzen, die Finger einklemmen noch aufwändige Maßnahmen vornehmen, um das Werkzeug in diese Montagestellung zu bringen.

Insbesondere soll das Werkzeug spannungsfrei sein, so dass eine vorhandene Feder z. B. Gasdruckfeder entnommen werden kann, um die Arbeiten am Werkzeug auszuführen. Anders ausgedrückt muss die "Montagestellung" auch ermöglichen, dass die Gasdruckfeder ausgebaut ist, um die Arbeiten am Werkzeug durchführen zu können.

Im Stand der Technik bekannte Keiltriebe sehen daher vor, dass mittels aufwändiger Maßnahmen eine Montagestellung herbeigeführt wird. Diese Maßnahmen sind verletzungsanfällig, zeitaufwändig und teuer und erfordern immer auch noch ein zusätzliches Bauteil, das dann montiert werden muss, um die Position zu fixieren.

Ein Keiltrieb nach dem Oberbegriff des Anspruchs 1 ist aus US5904064A bekannt.

Der Erfindung liegt deshalb die Aufgabe zugrunde, vorbesagte Nachteile zu überwinden und einen Keiltrieb mit einer Einrichtung bereitzustellen, mit der es möglich ist, sowohl die Montagestellung des Werkzeugs als auch die Arbeitsstellung des Werkzeugs zu realisieren.

Diese Aufgabe wird durch die Merkmalskombination gemäß Anspruch 1 gelöst.

Erfindungsgemäß wird ein Keiltrieb mit einem Schieberoberteil, einem Schieberunterteil und einem zwischen dem Schieberoberteil und dem Schieberunterteil angeordneter Schieber vorgeschlagen, der in seiner Arbeitsstellung über Gleitflächen zwischen einer geschlossenen und einer offenen Position hin- und her bewegbar ist, wobei der Schieber zur Herstellung entweder der Arbeitsposition oder einer Montageposition mit einer positionsveränderlichen Einrichtung ausgestattet ist, wobei am Schieber hierzu ein erster Anschlag sowie ein separater zweiter Anschlag vorgesehen ist, wobei in der Arbeitsstellung des Keiltriebs die Einrichtung so positioniert ist, dass diese als Begrenzer für den ersten Anschlag dient, wenn der Keiltrieb in seiner bestimmungsgemäß vollständig geöffneten Stellung betätigt wird oder ist und wobei in der Montagestellung die Einrichtung so positioniert ist, dass sich der zweite Anschlag an der Einrichtung abstützt.

Besonders vorteilhaft ist dabei, dass die positionsveränderliche Einrichtung hierzu mittels eines Befestigungsmittel ortsveränderlich am Keiltrieb befestigbar ist, während eine sozusagen "gemeinsame" Funktionsfläche an der Einrichtung sowohl mit dem ersten Anschlag in der Arbeitsstellung eine erste Funktion besitzt und in der Montagestellung zusammen mit dem zweiten Anschlag eine davon völlig getrennte Funktion, nämlich der Fixierung des Schiebers in einer definierten, insbesondere geschlossenen Position.

Auf diese Weise lassen sich mit einer einzigen Einrichtung unterschiedliche Funktionen im Werkzeug realisieren.

Besonders vorteilhaft ist es, wenn die Einrichtung nur in der geschlossenen Stellung des Keiltriebs von der Arbeitsstellung in die Montagestellung gebracht werden kann.

In einer bevorzugten Ausgestaltung der Erfindung ist vorgesehen, dass die Einrichtung eine (dafür einzige) Funktionsfläche besitzt, die sich in der Arbeitsstellung unmittelbar gegenüber dem ersten Anschlag vorzugsweise unter Ausbildung eines Luftspaltes befindet und in der Montagestellung unmittelbar gegenüberliegend oder anliegend am zweiten Anschlag. In der Montagestellung bilden der zweite Anschlag und die Funktionsfläche der positionsveränderlichen Einrichtung somit ein Lager zur Fixierung und Blockierung des Schiebers aus. Hierzu befindet sich mit Vorteil der zweite Anschlag mit seiner Anschlagfläche im geschlossenen Zustand des Keiltriebs in einer gemeinsamen Ebene mit der besagten Funktionsfläche der positionsveränderbaren Einrichtung, weiter mit Vorteil sowohl in dessen Arbeitsstellung als auch in der Montagestellung.

Ebenfalls von Vorteil ist es, wenn die Funktionsfläche der Einrichtung in eine Anlagefläche überführt, die vorzugsweise in der gleichen Ebene liegt und wobei diese Anlagefläche der Einrichtung sowohl in der Arbeitsstellung als auch in der Montagestellung unmittelbar oder mittelbar gegen eine Montagefläche am Schieberoberteil anliegt bzw. dort befestigt ist.

In einer ebenfalls vorteilhaften Ausgestaltung der Erfindung ist vorgesehen, dass der erste Anschlag in Bewegungsrichtung des Schiebers relativ zum Schieberoberteil betrachtet, gegenüber dem zweiten Anschlag versetzt angeordnet ist, vorzugsweise um exakt die Distanz, die er erste Anschlag bei seiner Bewegung von der geschlossenen Position in die geöffnete Position des Keiltriebs in der besagten Betätigungsrichtung des Schiebers zurücklegt.

Weiter vorteilhaft ist es, wenn die Funktionsfläche der positionsveränderlichen Einrichtung vollständig oder zumindest eine Teilfläche davon ausbildet, die in einer Parallelebene zu denjenigen Flächen orientiert ist, die an dem ersten und/oder zweiten Anschlag die Anschlagfläche mit der Funktionsfläche bilden.

In einer weiteren bevorzugten Ausführungsform der Erfindung ist vorgesehen, dass die positionsveränderliche Einrichtung ein Befestigungsmittel und eine einzige Befestigungsöffnung für dieses Befestigungsmittel umfasst, die sowohl für die Herstellung der Arbeitsstellung als auch der Montagestellung verwendet werden.

In vorteilhafter Weise kann vorgesehen sein, dass zur Befestigung der Einrichtung am Schieberoberteil zwei räumlich voneinander getrennte (z. B. untereinander angeordnete) werkzeugseitige Befestigungsmittel, vorzugsweise ausgebildet als Sacklöcher mit Gewinde vorgesehen sind, an denen sich die besagte Einrichtung mittels eines lösbaren Befestigungsmittel zur Herstellung der Arbeitsstellung oder der Montagestellung wahlweise an dem einen oder anderen Befestigungsmittel befestigen lässt. Somit kann die Einrichtung entweder an dem oberen oder unteren Loch befestigt werden, wodurch dann entweder eine erste Funktion (Arbeitsstellung mit Endanschlag) und eine zweite Funktion (Montagestellung zur Schieberfixierung) mit einer einzigen Einrichtung realisiert werden können.

In einer weiteren bevorzugten Ausführungsform der Erfindung ist vorgesehen, dass eine Feder bzw. Gasdruckfeder zum Betätigen des Keiltriebs vorgesehen ist, und die Einrichtung relativ zur Gasdruckfeder so montiert ist, dass die Gasdruckfeder oder allgemein Feder in der Montagestellung der Einrichtung aus dem Keiltrieb entnommen werden kann.

Weiter von Vorteil ist es, wenn in der Arbeitsstellung im bestimmungsgemäßen Gebrauch in der vollständig geöffneten Stellung des Keiltriebs zwischen der Einrichtung und dem ersten Anschlag bestimmungsgemäß ein Luftspalt vorgesehen ist und sich vorzugsweise ein elastischer Puffer zumindest teilweise von dem Anschlag in Richtung der Einrichtung in den Luftspalt hinein erstreckt oder an der Einrichtung zur Anlage kommt. Das bedeutet, dass die Konfiguration so vorgenommen werden kann, dass die erste Anschlagfläche im geöffneten Zustand des Keiltriebs nicht zwingend an der Funktionsfläche der positionsveränderlichen Einrichtung anliegen muss, sondern sich auch nur unmittelbar gegenüber befinden kann, dazwischen aber ein schmaler Luftspalt verbleibt. Der Puffer verhindert auch, dass eine Beschädigung an den gegenüberliegenden Flächen erzeugt wird.

Die vorstehend offenbarten Merkmale sind beliebig kombinierbar, soweit dies technisch sinnvoll möglich ist und diese nicht im Widerspruch zueinander stehen auch wenn dies nicht im Einzelnen in allen Kombinationen erläutert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Keiltrieb in einer isometrischen Darstellung;
- Fig. 2: den Keiltrieb aus der Figur 1 in einer Seitenansicht;
- Fig. 3: einen Schnitt durch den Keiltrieb in der geschlossenen Stellung (Arbeitsstellung);
- Fig. 4: einen Schnitt durch den Keiltrieb in der geöffneten Stellung (Arbeitsstellung);
- Fig. 5: einen Schnitt durch den Keiltrieb in der Montagestellung.

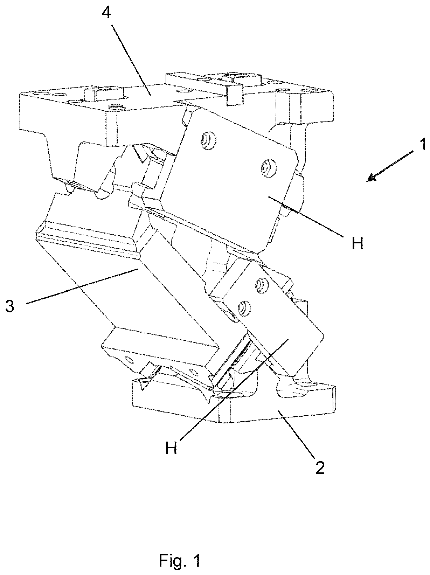

Die Erfindung wird nachfolgend anhand eines Ausführungsbeispiels näher mit Bezug auf die Figuren 1 bis 5 erläutert. Die Figuren sind beispielhaft schematisch. Gleiche Bezugszeichen in den Figuren weisen auf gleiche funktionale und/oder strukturelle Merkmale hin.

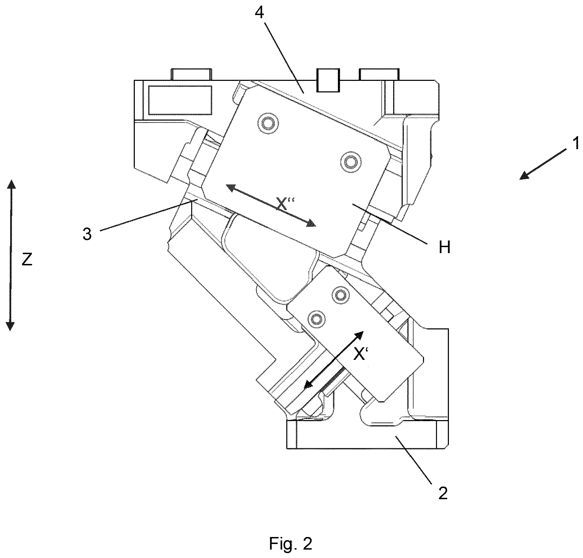

Die Figur 1 zeigt einen ersten Keiltrieb 1 in isometrischer Darstellung. Figur 2 stellt diesen in einer Seitenansicht dar. Die Hubrichtung Z, entlang derer der das Schieberoberteil 4 und das Schieberunterteil 2 mit dem Schieber 3 aufeinander zu bzw. auseinander bewegt werden, ist jeweils durch einen Pfeil dargestellt. Zwischen dem Schieberoberteil 4 und dem Schieber 3 sowie zwischen dem Schieberunterteil 2 und dem Schieber 3 ist jeweils eine Führungsvorrichtung vorgesehen. Die Führungsvorrichtung zwischen dem Schieberoberteil 4 und dem Schieber 3 ist als Hauptführungsvorrichtung mit einer Halterklammer H und die Führungsvorrichtung zwischen dem Schieberunterteil 2 und dem Schieber 3 als Zwangsrückführungsvorrichtung mit einer Halteklammer H ausgebildet.

Die jeweilige Halteklammer H dient der Zwangsführung jeweils in der gezeigten Gleitrichtung X', X".

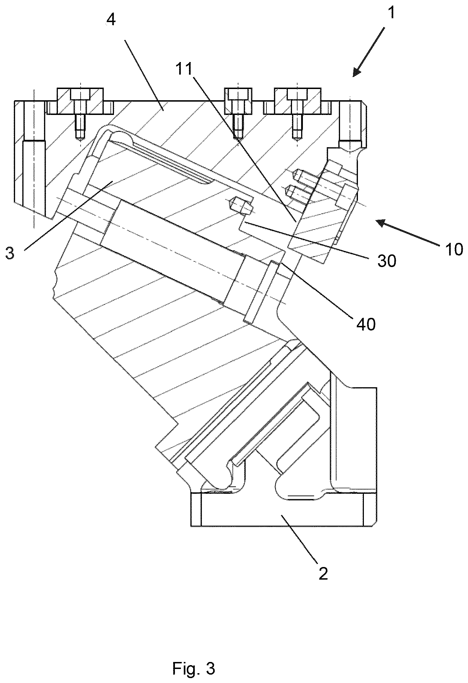

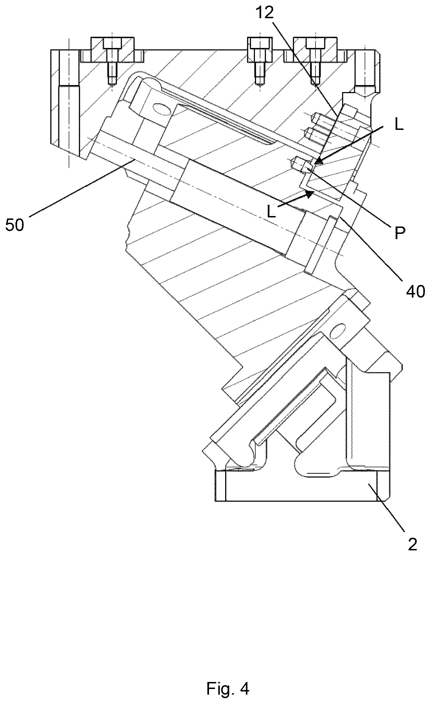

Die Figuren 3 und 4 zeigen den Keiltrieb 1 in einer Schnittansicht in ihrer jeweiligen Arbeitsstellung. Die Figur 3 zeigt einen Schnitt durch den Keiltrieb 1 in der geschlossenen Stellung (Arbeitsstellung) und die Figur 4 zeigt einen Schnitt durch den Keiltrieb 1 in der (vollständig) geöffneten Stellung (Arbeitsstellung) am Ende eines Hubs in Z-Richtung des Keiltriebs 1.

Der Keiltrieb 1 besitzt somit das Schieberoberteil 4, das Schieberunterteil 2 und den zwischen dem Schieberoberteil 4 und dem Schieberunterteil 2 angeordneten Schieber 3, der in einer Arbeitsstellung über Gleitflächen zwischen einer geschlossenen (Fig. 3) und einer offenen Position (Fig. 4) hin- und her bewegbar ist, wobei der Schieber 3 zur Herstellung entweder der Arbeitsposition oder einer Montageposition mit einer positionsveränderlichen Einrichtung 10 ausgestattet ist.

Der Schieber 3 besitzt einen ersten Anschlag 30 sowie einen in Bewegungsrichtung X" versetzten separaten zweiten Anschlag 40. Die Anschläge 30 und 40 liegen demnach in Parallelebenen versetzt um etwa die Verlagerung des Schiebers 3 in Richtung X" bei einem vollständigen Hub.

In der Arbeitsstellung des Keiltriebs 1 ist die Einrichtung 10 so positioniert, wie in den Figuren 3 und 4 gezeigt, nämlich an der in der Zeichnung oberen Befestigungsöffnung mittels einer Schraube fixiert.

In dieser Stellung dient die Einrichtung 10 mit ihrer Funktionsfläche 11 als Begrenzer für den ersten Anschlag 30 und damit den Schieber 3 in Betätigungsrichtung X".

Das bedeutet, dass der Keiltrieb 1 in seiner bestimmungsgemäß vollständig geöffneten Stellung, wie in der Fig. 4 gezeigt, nicht weiter geöffnet werden kann, da dann der erste Anschlag 30 gegen die Funktionsfläche 11 aufläuft. In der Arbeitsstellung im bestimmungsgemäßen Gebrauch in der vollständig geöffneten Stellung des Keiltriebs 1 ist, wie in der Figur 4 ebenfalls zu erkennen, zwischen der Einrichtung 10 und dem ersten Anschlag 30 ein Luftspalt L vorgesehen. Am Anschlag 30 ist ein elastischer Puffer P vorgesehen, der sich in den Luftspalt L hinein erstreckt und als Schutz für die korrespondierenden Flächen dient.

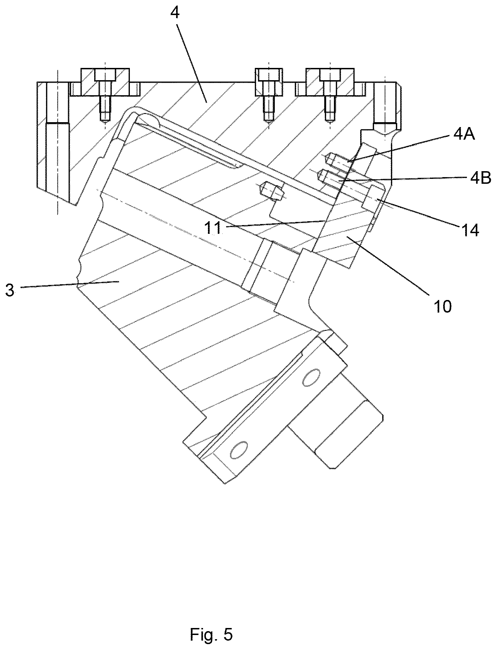

Hingegen wird in der Montagestellung die Einrichtung 10 davon abweichend so positioniert, wie in der Figur 5 gezeigt, nämlich so, dass sich der zweite Anschlag 40 an der Einrichtung 10 unmittelbar abstützt. Anders ausgedrückt, bilden der Anschlag 40 ein erstes Lager und die Funktionsfläche 11 der Einrichtung 10 ein entsprechendes Gegenlager aus. Der Schieber 3 ist nun fixiert, so dass Arbeiten an dem Keiltrieb 1 ausgeführt werden können.

Eine Besonderheit besteht allerdings darin, dass die Gasdruckfeder 50, die zum Betätigen des Keiltriebs vorgesehen ist, in der Montagestellung der Einrichtung 10 aus dem Keiltrieb 1 entnommen werden kann.

Die Funktionsfläche 11 der Einrichtung 10 führt unmittelbar in die Anlagefläche 12, wobei die Anlagefläche 12 sowohl in der Arbeitsstellung als auch in der Montagestellung der der Einrichtung 10 unmittelbar gegen eine korrespondierende Montagefläche am Schieberoberteil 4 anliegt, wie dies in den Figuren 3 bis 5 ersichtlich ist.

Gemäß der Idee der Erfindung wird die positionsveränderliche Einrichtung 10 über ein (einziges) Befestigungsmittel 14 und eine einzige Befestigungsöffnung in der Einrichtung 10 (hier ein Montageblock 10) befestigt, so dass man keine gesonderten (insbesondere externen zusätzlichen) Befestigungsmittel benötigt, wenn man die Einrichtung 10 von ihrer Arbeitsstellung in die Montagestellung (oder umgekehrt) montieren möchte.

Hierzu sind zur Befestigung der Einrichtung 10 am Schieberoberteil 4 zwei räumlich voneinander getrennte Sacklöcher mit Gewinde 4A, 4B vorgesehen, an denen sich die Einrichtung 10 mittels einer Schraube 14 zur Herstellung der Arbeitsstellung oder der Montagestellung wahlweise an dem einen oder anderen Sackloch 4A, 4B fixieren lässt. Ferner kann vorgesehen sein, dass die Einrichtung 10 auch den Schieber 3 fixiert, beispielsweise mittels einer Schraubverbindung oder einer alternativen geeigneten Fixierverbindung.

## Patentansprüche

1. Keiltrieb (1) mit einem Schieberoberteil (4), einem Schieberunterteil (2) und einem zwischen dem Schieberoberteil (4) und dem Schieberunterteil (2) angeordneten Schieber (3), der in einer Arbeitsstellung über Gleitflächen zwischen einer geschlossenen und einer offenen Position hin- und her bewegbar ist, wobei der Schieber (3) zur Herstellung entweder der Arbeitsposition oder einer Montageposition mit einer positionsveränderlichen Einrichtung (10) ausgestattet ist, **dadurch gekennzeichnet, dass** am Schieber (3) hierzu ein erster Anschlag (30) sowie ein separater zweiter Anschlag (40) vorgesehen ist, wobei in der Arbeitsstellung des Keiltriebs (1) die Einrichtung (10) so gegenüber dem Schieber (3) positioniert ist, dass diese als Begrenzer für den ersten Anschlag (30) dient, wenn der Keiltrieb (1) in seine bestimmungsgemäß vollständig geöffnete Stellung betätigt wird oder ist und wobei in der Montagestellung die Einrichtung (10) so positioniert ist, dass sich der zweite Anschlag (40) an der Einrichtung (10) abstützt.

2. Keiltrieb (1) nach Anspruch 1, **dadurch gekennzeichnet, dass** die Einrichtung (10) nur in der geschlossenen Stellung des Keiltriebs (1) von der Arbeitsstellung in die Montagestellung gebracht werden kann.

3. Keiltrieb (1) nach Anspruch 1 oder 2, **dadurch gekennzeichnet, dass** die Einrichtung (10) eine Funktionsfläche (11) besitzt, die sich in der Arbeitsstellung unmittelbar gegenüber dem ersten Anschlag (30) vorzugsweise unter Ausbildung eines Luftspaltes (L) befindet und in der Montagestellung unmittelbar gegenüberliegend oder anliegend am zweiten Anschlag (40).

4. Keiltrieb (1) nach Anspruch 3, **dadurch gekennzeichnet, dass** die Funktionsfläche (11) der Einrichtung (10) in eine Anlagefläche (12) überführt, vorzugsweise in der gleichen Ebene liegt und wobei die Anlagefläche (12) sowohl in der Arbeitsstellung als auch in der Montagestellung unmittelbar oder mittelbar gegen eine Montagefläche am Schieberoberteil (4) anliegt.

5. Keiltrieb (1) nach einem der vorhergehenden Ansprüche, wobei der erste Anschlag (30) in Bewegungsrichtung (B1) des Schiebers (3) relativ zum Schieberoberteil (4) betrachtet, gegenüber dem zweiten Anschlag (40) versetzt angeordnet ist.

6. Keiltrieb (1) nach einem der Ansprüche 3 bis 5, **dadurch gekennzeichnet, dass** die Funktionsfläche (11) vollständig oder zumindest eine Teilfläche davon ausbildet, die in einer Parallelebene zu denjenigen Flächen orientiert ist, die an dem ersten und/oder zweiten Anschlag (30, 40) die Anschlagfläche mit der Funktionsfläche (11) bilden.

7. Keiltrieb (1) nach einem der vorhergehenden Ansprüche, wobei die positionsveränderliche Einrichtung (10) ein Befestigungsmittel und eine einzige Befestigungsöffnung umfasst, die sowohl für die Herstellung der Arbeitsstellung als auch der Montagestellung verwendet werden oder alternativ zwei Befestigungsöffnungen in der Einrichtung (10) vorgesehen sind, wovon jeweils eine wahlweise mit einer korrespondierenden Befestigungsöffnung im Schieberoberteil (4) zusammen wirken.

8. Keiltrieb (1) nach einem der vorhergehenden Ansprüche, **dadurch gekennzeichnet, dass** zur Befestigung der Einrichtung (10) an der Einrichtung ein und am Schieberoberteil (4) zwei räumlich voneinander getrennte werkzeugseitige Befestigungsmittel (4A, 4B), vorzugsweise ausgebildet als Sacklöcher mit Gewinde vorgesehen sind oder umgekehrt an der Einrichtung zwei und am Schieberoberteil (4) ein, an denen sich die Einrichtung (10) mittels eines lösbaren Befestigungsmittel (14) zur Herstellung der Arbeitsstellung oder der Montagestellung wahlweise an dem jeweils einen oder anderen Befestigungsmittel (4A, 4B) befestigen lässt.

9. Keiltrieb (1) nach einem der vorhergehenden Ansprüche, **dadurch gekennzeichnet, dass** in der Arbeitsstellung im bestimmungsgemäßen Gebrauch in der vollständig geöffneten Stellung des Keiltriebs (1) zwischen der Einrichtung (10) und dem ersten Anschlag (30) ein Luftspalt (L) vorgesehen ist und sich vorzugsweise ein elastischer Puffer (P) zumindest teilweise von dem Anschlag (30) in Richtung der Einrichtung (10) in den Luftspalt hinein erstreckt oder an der Einrichtung (10) zur Anlage kommt.

## Claims

1. A wedge drive (1) with a slider top (4), a slider bottom (2) and a slider (3) arranged between the slider top (4) and the slider bottom (2) which in a working position is movable back and forth between closed and open positions via sliding surfaces, wherein for establishing either the working position or a mounting position, the slider (3) is equipped with an apparatus (10) variable in location, **characterised in that**, for this purpose, a first stop (30) as well as a separate second stop (40) are provided on the slider (3), wherein in the working position of the wedge drive (1), the apparatus (10) is positioned opposite the slider (3) such that it serves as a limiter for the first stop (30) when the wedge drive (1) is being or has been actuated to its fully opened position as intended, and wherein in the mounting position, the apparatus (10) is positioned such that the second stop (40) supports itself on the apparatus (10).

2. The wedge drive (1) according to claim 1, **characterised in that** the apparatus (10) can only be taken from the working position to the mounting position with the wedge drive (1) in the closed position.

3. The wedge drive (1) according to claim 1 or 2, **characterised in that** the apparatus (10) has a functional surface (11) located in the working position directly opposite the first stop (30), preferably forming an air gap (L), and in the mounting position directly opposing or contacting the second stop (40).

4. The wedge drive (1) according to claim 3, **characterised in that** the functional surface (11) of the apparatus (10) transitions into a contact surface (12) which is preferably in the same plane and wherein the contact surface (12) directly or indirectly contacts a mounting surface on the slider top (4) both in the working position and in the mounting position.

5. The wedge drive (1) according to any one of the preceding claims, wherein the first stop (30) in a direction of travel (B1) of the slider (3) viewed relative to the slider top (4) is arranged offset from the second stop (40).

6. The wedge drive (1) according to any one of claims 3 to 5, **characterised in that** the functional surface (11) fully forms or at least a partial surface thereof which is oriented in a parallel plane to those surfaces forming the contact surface with the functional surface (11) at the first and/or second stops (30, 40).

7. The wedge drive (1) according to any one of the preceding claims, wherein the apparatus (10) variable in location comprises a fastening means and a single fastening opening which are used for establishing both the working position and the mounting position or, alternatively, two fastening openings are provided in the apparatus (10), one of which optionally cooperating with a corresponding fastening opening in the slider top (4) at a time.

8. The wedge drive (1) according to any one of the preceding claims, **characterised in that** for fastening the apparatus (10), one fastening means is provided on the apparatus and two spatially separated tool-side fastening means (4A, 4B), preferably formed as threaded blind holes, are provided on the slider top (4) or, conversely, two are provided on the apparatus and one is provided on the slider top (4), at which the apparatus (10) may optionally be fastened to the one or the other fastening means (4A, 4B) at a time by means of a releasable fastening means (14) for establishing the working position or the mounting position.

9. The wedge drive (1) according to any one of the preceding claims, **characterised in that** in the working position, when in use as intended in the fully opened position of the drive wedge (1), an air gap (L) is provided between the apparatus (10) and the first stop (30) and preferably an elastic buffer (P) extends at least partially from the stop (30) towards the apparatus (10) into the air gap or comes into contact with the apparatus (10).

## Revendications

1. Entraînement par coulisseau (1) comportant une partie supérieure coulissante (4), une partie inférieure coulissante (2) et un coulisseau (3) disposé entre la partie supérieure coulissante (4) et la partie inférieure coulissante (2), qui, dans une position de travail peut être déplacé d'avant en arrière entre une position fermée et une position ouverte via des surfaces de glissement, dans lequel le coulisseau (3) est équipé d'un dispositif de position variable (10) pour réaliser soit la position de travail, soit une position de montage, **caractérisé en ce qu'**une première butée (30) et une seconde butée séparée (30) sont prévues à cet effet sur le coulisseau (3), dans lequel le dispositif (10) est positionné par rapport au coulisseau (3) dans la position de travail de l'entraînement par coulisseau (1) de sorte qu'il sert de limiteur pour la première butée (30) lorsque l'entraînement par coulisseau (1) est actionné dans sa position d'ouverture totale prévue et dans lequel le dispositif (10) est positionné dans la position de montage de sorte que la seconde butée (40) s'appuie sur le dispositif (10).

2. Entraînement par coulisseau (1) selon la revendication 1, **caractérisé en ce que** le dispositif (10) ne peut être amené de la position de travail à la position de montage que lorsque l'entraînement par coulisseau (1) est en position fermée.

3. Entraînement par coulisseau (1) selon la revendication 1 ou 2, **caractérisé en ce que** le dispositif (10) présente une surface fonctionnelle (11) qui, en position de travail, est située directement en face de la première butée (30), formant de préférence un entrefer (L), et en position de montage est située de manière directement opposée ou adjacente à la seconde butée (40).

4. Entraînement par coulisseau (1) selon la revendication 3, **caractérisé en ce que** la surface fonctionnelle (11) du dispositif (10) est transformée en une surface de contact (12), située de préférence dans le même plan, et dans lequel la surface de contact (12) repose directement ou indirectement contre une surface de montage de la partie supérieure coulissante (4) à la fois en position de travail et en position de montage.

5. Entraînement par coulisseau (1) selon l'une des revendications précédentes, dans lequel la première butée (30), vue dans le sens de déplacement (B1) du coulisseau (3) par rapport à la partie supérieure coulissante (4), est décalée par rapport à la seconde butée (40).

6. Entraînement par coulisseau (1) selon l'une des revendications 3 à 5, **caractérisé en ce que** la surface fonctionnelle (11) forme entièrement ou au moins une surface partielle qui est orientée dans un plan parallèle aux surfaces qui forment la surface de butée avec la surface fonctionnelle (11) sur la première et/ou la seconde butée (30, 40).

7. Entraînement par coulisseau (1) selon l'une des revendications précédentes, dans lequel le dispositif à position variable (10) comprend un moyen de fixation et une ouverture de fixation unique, qui sont utilisés à la fois pour la réalisation de la position de travail et de la position de montage, ou bien deux ouvertures de fixation sont prévues dans le dispositif (10), dont chacune coopère éventuellement avec une ouverture de fixation correspondante dans la partie supérieure coulissante (4).

8. Entraînement par coulisseau (1) selon l'une des revendications précédentes, **caractérisé en ce qu'**un moyen de fixation et deux moyens de fixation (4A, 4B) côté outil spatialement séparés, de préférence réalisés sous forme de trous borgnes avec un filetage, sont prévus pour la fixation du dispositif (10) sur le dispositif et sur la partie supérieure coulissante (4) respectivement, ou vice versa, deux sont prévus sur le dispositif et un sur la partie supérieure coulissante (4), sur laquelle le dispositif (10) peut être fixé au moyen d'un moyen de fixation amovible (14) pour réaliser la position de travail ou la position de montage, éventuellement sur l'un ou l'autre des moyens de fixation (4A, 4B).

9. Entraînement par coulisseau (1) selon l'une des revendications précédentes, **caractérisé en ce qu'**un entrefer (L) est prévu dans la position de travail lors de l'utilisation prévue, dans la position complètement ouverte de l'entraînement par coulisseau (1) entre le dispositif (10) et la première butée (30) et, de préférence, un tampon élastique (P) s'étend au moins partiellement depuis la butée (30) en direction du dispositif (10) dans l'entrefer ou entre en contact avec le dispositif (10).
